**Europäisches Patentamt**

**European Patent Office**

**Office européen des brevets**

(19)

(11) Veröffentlichungsnummer: **0 253 320**
**A1**

(12)

# EUROPÄISCHE PATENTANMELDUNG

(21) Anmeldenummer: **87109952.9**

(22) Anmeldetag: **10.07.87**

(51) Int. Cl.4: **B23K 9/20**

(30) Priorität: **18.07.86 DE 3624326**

(43) Veröffentlichungstag der Anmeldung:
**20.01.88 Patentblatt 88/03**

(84) Benannte Vertragsstaaten:
**DE FR GB IT SE**

(71) Anmelder: **BAYERISCHE MOTOREN WERKE
Aktiengesellschaft
Postfach 40 02 40 Petuelring 130 - AJ-36
D-8000 München 40(DE)**

(72) Erfinder: **Raupach, Werner
Münchner Strasse 13 b
D-8059 Eichenried(DE)**

(74) Vertreter: **Schweiger, Erwin
c/o Bayerische Motoren Werke AG - AJ-35
Postfach 40 02 40 Petuelring 130
D-8000 München 40(DE)**

(54) **Bolzenzuführungsvorrichtung für Bolzenschweisswerkzeuge.**

(57) Bei den bekannten Bolzenschweißwerkzeugen mit Trommelspeicher zum Zuführen der Bolzen dreht sich der Trommelspeicher bei jedem Arbeitszyklus, d. h. jeweils wenn ein Bolzen angeschweißt wird. Da aber der Trommelspeicher aufgrund seiner Bauart jedesmal eine Vielzahl von Bolzen liefert und jeweils pro Arbeitszyklus nur ein Bolzen abgerufen wird, entsteht durch die Drehung des Trommelspeichers unnötige Lärmbelästigung. Darüber hinaus bedeutet dies einen unnötigen Energiebedarf zum Drehen der Trommel. Erfindungsgemäß wird vorgeschlagen, in der Einlaufschiene, die zwischen Trommelspeicher und Vereinzelungseinrichtung angeordnet ist, einen Näherungsschalter einzusetzen, der solange Bolzen dort vorhanden sind, den Antrieb des Trommelspeichers außer Betrieb setzt.

EP 0 253 320 A1

## Bolzenzuführungsvorrichtung für Bolzenschweißwerkzeuge

Die Erfindung bezieht sich auf eine Vorrichtung der im Oberbegriff des ersten Anspruchs angegebenen Art.

Aus der DE-AS 19 21 025 ist eine gattungsgemäße Vorrichtung bekannt. Diese Vorrichtung ist derart aufgebaut, daß bei jedem Transportvorgang eines Bolzens zu dem Schweißwerkzeug sich gleichzeitig der Trommelspeicher dreht. Der Trommelspeicher ist hierbei so ausgelegt, daß er eine Vielzahl von Bolzen aufnimmt und ausrichtet und in eine Einlaufschiene ablegt. Aufgrund der Länge der Übergabebahn ist diese nach zwei-bis dreimaligem Drehen des Trommelspeichers gefüllt. Da jeweils nur ein einzelner Bolzen dem Bolzenschweißwerkzeug vorgelagert wird, bedeutet jedes weitere Drehen, daß zwar der Trommelspeicher eine Vielzahl von Bolzen nachliefert, aber aufgrund des Platzbedarfes nur ein einziger Bolzen in der Einlaufschiene aufgenommen werden kann. Dies bedeutet unnötiger Energiebedarf zum Antrieb des Bolzentrommelspeichers.

Aufgabe der vorliegenden Erfindung ist es, die gattungsgemäße Bolzenzuführungsvorrichtung dahingehend zu verbessern, daß der Trommelspeicher nicht dauernd mitläuft. Diese Aufgabe wird erfindungsgemäß durch die kennzeichnenden Merkmale des Anspruchs gelöst. Aufgrund der Anbringung eines einfachen Näherungsschalters wird erreicht, daß, sobald dieser Näherungsschalter von einem Bolzen betätigt wird, der Antrieb des Trommelspeichers solange stillgesetzt wird, bis der Näherungsschalter keinen Bolzen mehr erfaßt. Sinnvollerweise wird der Näherungsschalter derart angeordnet, daß am Ausgang der Einlaufschiene noch mindestens zwei oder drei Bolzen vorhanden sind, wenn der Näherungsschalter ein Signal zum Auffüllen liefert. Dadurch können in den nächsten ein bis zwei Arbeitszyklen von dem Trommelspeicher ausreichend Bolzen in die Einlaufschiene geliefert werden, so daß diese wieder vollständig gefüllt ist. Dadurch wird wesentlich weniger Verschleiß sowohl des Trommelspeichers als auch der Übergabemechanik erreicht. Aufgrund der wesentlich verringerten Drehzyklen der Trommel wird auch die Verschmutzung der Bolzen durch Abrieb verringert. Weiterhin wird hierdurch die Lärmbelästigung der Werker wesentlich herabgesetzt, da jedes Drehen der Trommel eine starke Lärmbelästigung bedeutet.

Im folgenden wird die Erfindung anhand eines ausgewählten Beispiels näher erläutert.

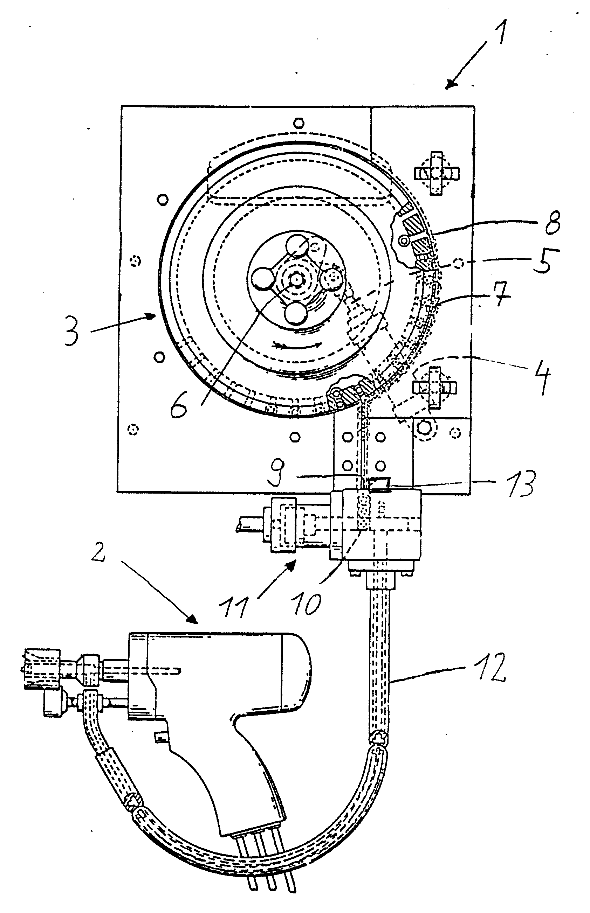

In der einzigen Abbildung ist schematisch eine Bolzenzuführungsvorrichtung 1 für Schweißbolzenwerkzeuge 2 gezeigt. Als Bolzenmagazin ist eine drehbare Trommel 3 vorgesehen, die über eine Zylinderkolbeneinheit 4 angetrieben wird. Hierzu ist die Kolbenstange 5 über eine Freilaufkupplung mit der Lagerwelle 6 der Trommel verbunden. Wird nun die Kolbenstange 5 plötzlich herausgefahren, so wird die Trommel 3 gedreht und kann aufgrund der Freilaufkupplung 6 mehrere Umdrehungen ausführen. Hierbei werden die in ihr gelagerten Bolzen 7 zum Trommelrand transportiert und dort in eine bogenförmige Bahn 8 lagerichtig abgelegt. Diese bogenförmige Bahn 8 mündet in die Einlaufschiene 9, die in Richtung der Schwerkraft geneigt ist und in der die Bolzen zu einem Auslaß 10 rutschen, von wo aus sie über eine Bolzenvereinzelungseinrichtung 11 in einem profilierten Schlauch 12 zu dem Bolzenschweißwerkzeug 2 transportiert werden.

Eine derartige Vorrichtung ist üblich und wird deshalb nicht näher beschrieben.

Erfindungsgemäß ist im Auslaßbereich 10 der Einlaufschiene 9 ein Näherungsschalter 13 angeordnet. Dieser Näherungsschalter ist mit der Druckluftsteuerung der Kolbenzylindereinheit 4 zum Antrieb der Trommel 3 verbunden.

Zu Beginn eines Arbeitszyklus dreht sich der Trommelspeicher 3 und füllt die Bahn 8 mit Bolzen. Diese rutschen aufgrund der Schwerkraft in die Einlaufschiene 9 bis zum Auslaß 10. Aufgrund des Näherungsschalters 13 wird nun bei einem weiteren Arbeitszyklus der Antrieb der Zylinderkolbeneinheit 5 des Trommelspeichers 3 unterbrochen, und zwar solange, bis der Näherungsschalter 13 keine Bolzen mehr erfaßt. Erst dann wird der Trommelspeicher 3 wieder gedreht und liefert eine Anzahl von Bolzen zur Einlaufschiene 9. Aufgrund des Näherungsschalters 13 wird nun der Antrieb des Trommelspeichers wieder unterbrochen.

## Ansprüche

Bolzenzuführungsvorrichtung für Bolzenschweißwerkzeuge, mit Einzelzuführung der Bolzen zum Schweißwerkzeug, einem drehbar antreibbaren Trommelspeicher zum Speichern der einzelnen Bolzen, an dessen Ausgang eine im wesentlichen in Richtung der Schwerkraft geneigt verlaufende Einlaufschiene angeordnet ist, von der aus die einzelnen Bolzen in eine Bolzentransportleitung zum Werkzeug geführt werden,
dadurch gekennzeichnet, daß im Ausgangsbereich (10) der Einlaufschiene (9) ein Näherungsschalter (13) angeordnet ist, der mit der Steuerung des Trommelspeichers (3) zusammenwirkt.

0 253 320

## EINSCHLÄGIGE DOKUMENTE

EP 87109952.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - A - 2 347 277 (MATSUSHITA)<br>\* Anspruch 1; Fig. 8a,b; Seiten 22-29\*<br>-- | 1 | B 23 K 9/20 |
| A,D | DE - B2 - 1 921 025 (TRW INC.)<br>\* Fig. 1 \*<br>---- | 1 | |

RECHERCHIERTE SACHGEBIETE (Int. Cl.4)

B 23 K 9/00

B 25 B 23/00

Der vorliegende Recherchenbericht wurde für alle Patentansprüche erstellt.

| Recherchenort | Abschlußdatum der Recherche | Prüfer |
|---|---|---|
| WIEN | 22-10-1987 | BENCZE |